# EUROPEAN PATENT APPLICATION

(11) **EP 4 757 137 A1**
(43) Date of publication of application: **10.06.2026**
(21) Application number: 24848260.6
(22) Date of filing: 30.07.2024
(51) Int. Cl.: H02K 7/08, H02K 7/00, H02K 11/00, H02K 11/40

(54) **PROTECTIVE RING AND MOTOR**

(30) Priority: 31.07.2023 CN 202322057833 U
(71) Applicant: BYD Company Limited, Shenzhen, Guangdong 518118 (CN)
(72) Inventor: FANG, Bin, Shenzhen, Guangdong 518118 (CN); LIU, Shuying, Shenzhen, Guangdong 518118 (CN); WANG, Mengde, Shenzhen, Guangdong 518118 (CN); WEN, Danhua, Shenzhen, Guangdong 518118 (CN); JIANG, Siben, Shenzhen, Guangdong 518118 (CN)
(74) Representative: Mathys & Squire
(86) International application number: PCT/CN2024/108421
(87) International publication number: WO 2025/026305

(57) **Abstract**

A guard ring and a motor are provided. The guard ring includes a ring body, a cover plate, and a plurality of conductive fiber bundles. The ring body is fixedly connected to the cover plate. A plurality of mounting slots are disposed on a surface of the ring body that faces the cover plate. The mounting slots are spaced apart in a circumferential direction of the ring body. The mounting slots extend through an inner ring of the ring body in a radial direction of the ring body. Each of the conductive fiber bundles is fastened in each of the mounting slots, and each conductive fiber bundle faces a center of the ring body and extends out of the mounting slot to be in contact with a motor shaft. A plurality of fastening tooth groups are convexly disposed on a surface of the cover plate that faces the ring body, and the fastening tooth group is configured to fasten the conductive fiber bundle in the mounting slot.

## Description

### [CROSS-REFERENCE TO RELATED APPLICATIONS]

This application claims priority to Chinese Patent Application No. 202322057833.9, filed with the China National Intellectual Property Administration on July 31, 2023 and entitled "GUARD RING AND MOTOR", which is incorporated herein by reference in its entirety.

### TECHNICAL FIELD

This application relates to the field of motor technologies, and in particular, to a guard ring and a motor with the guard ring.

### BACKGROUND

In order to avoid electrical corrosion of a motor bearing, which affects operating performance and service life of the motor bearing, a guard ring is usually disposed on a motor shaft. The guard ring is configured to ground a shaft voltage formed on the motor shaft, thereby avoiding electrical corrosion of the motor bearing by the shaft voltage. The guard ring is in contact with an outer circumferential surface of the motor shaft by using a conductive fiber bundle, so as to conduct a current on the motor shaft away from the motor shaft.

However, the conductive fiber bundle in existing guard rings usually employs a fastening structure in a single-point fastening manner, which results in a small effective contact area between the conductive fiber bundle and the ring body. Consequently, a conductive effect between the conductive fiber bundle and the ring body is poor, and the protective effect on the motor bearing is reduced.

### SUMMARY

To resolve the foregoing problem, this application provides a guard ring that can improve the conductive effect between a conductive fiber bundle and a ring body. This application further provides a motor with the guard ring. Specifically, the following solution is included.

This application provides a guard ring. The guard ring includes a ring body, a cover plate, and a plurality of conductive fiber bundles. The ring body is fixedly connected to the cover plate. A plurality of mounting slots are disposed on a surface of the ring body that faces the cover plate. The mounting slots are spaced apart in a circumferential direction of the ring body. The mounting slots extend through an inner ring of the ring body in a radial direction of the ring body. Each of the conductive fiber bundles is fastened in each of the mounting slots, and each conductive fiber bundle faces a center of the ring body and extends out of the mounting slot to be in contact with a motor shaft. A plurality of fastening tooth groups are convexly disposed on a surface of the cover plate that faces the ring body, and the fastening tooth group is configured to fasten the conductive fiber bundle in the mounting slot.

The guard ring provided in this application is provided with the ring body and the cover plate, so that the guard ring forms a split structure. This ensures a conductive effect of the guard ring, facilitates processing and manufacturing of the guard ring, and reduces manufacturing difficulty of the guard ring. The ring body is provided with the mounting slots to mount the conductive fiber bundles in the mounting slots, thereby achieving an effect of accommodating and positioning the conductive fiber bundles. In addition, the mounting slots extend through the inner ring of the ring body in the radial direction of the ring body, so that at least a part of the conductive fiber bundle fastened in each mounting slot can extend out of the ring body from the inner ring. In this way, an extending end of the conductive fiber bundle can be in contact with an outer circumferential surface of a motor shaft, thereby achieving a conductive effect. A current on the motor shaft is conducted away from the motor shaft, which reduces a shaft voltage on the motor shaft, thereby avoiding an adverse phenomenon of electrical corrosion of a motor bearing caused by an excessively high shaft voltage on the motor shaft.

In the guard ring provided in this application, the fastening tooth groups are disposed on the surface of the cover plate that faces the ring body, and positions of the fastening tooth groups are aligned with the mounting slots. In this way, when the cover plate is fixedly connected to the ring body, the fastening tooth group can extend into the mounting slot and exert a compressing effect on the conductive fiber bundle mounted in the mounting slot, which can increase an effective contact area between the conductive fiber bundle and the surface of the ring body, thereby improving the conductive effect between the conductive fiber bundle and the ring body and improving the protective effect on the motor bearing. In addition, the fastening tooth group compresses the corresponding conductive fiber bundle, so that the conductive fiber bundle can be fastened in the mounting slot. This avoids poor contact between the conductive fiber bundle and the motor shaft due to possible displacement of the conductive fiber bundle in the radial direction of the ring body, thereby further improving the effect of current conduction away from the motor shaft by the conductive fiber bundle.

In an embodiment, the positions of the fastening tooth groups are aligned with the mounting slots, and at least two fastening teeth are spaced apart in the fastening tooth group.

In this embodiment, the at least two fastening teeth are spaced apart corresponding to each mounting slot, and the at least two fastening teeth compress the conductive fiber bundle from different positions in the radial direction of the ring body, which can ensure the effective contact area between the entire conductive fiber bundle and the ring body, so as to further improve the conductive effect between the conductive fiber bundle and the ring body, further improve the protective effect of the guard ring provided in this application on the motor bearing, and improve use performance and a use effect of the guard ring provided in this application.

In an embodiment, both the cover plate and the ring body are manufactured through mold forming.

In this embodiment, the cover plate and the ring body are separately manufactured through mold folding, which improves the conductive effect of the guard ring, reduces difficulty of the manufacturing process of the guard ring, and improves manufacturing precision of the guard ring.

In an embodiment, on a cross section perpendicular to a radial direction of the guard ring, a cross-sectional area of the fastening teeth located in the mounting slot is 5% to 30% of a cross-sectional area of the mounting slot.

In this embodiment, a larger cross-sectional area of the fastening teeth relative to the cross-sectional area of the mounting slot indicates a greater degree of compression on the conductive fiber bundle corresponding to the fastening teeth when the fastening teeth extend into the mounting slot, that is, a greater degree of compression on the conductive fiber bundle. The cross-sectional area of the fastening teeth is set to be 5% to 30% of the cross-sectional area of the mounting slot, so that the degree of compression of the fastening teeth on the conductive fiber bundle can be limited. This ensures that the fastening teeth compress the conductive fiber bundle to increase the effective contact area between the conductive fiber bundle and the ring body, while avoiding an adverse phenomenon of possible breakage of the conductive fiber bundle when being compressed by the fastening teeth to be deformed due to an excessively high degree of compression of the fastening teeth on the conductive fiber bundle.

In an embodiment, the fastening teeth abut against and compress the conductive fiber bundle in the thickness direction of the guard ring.

In this embodiment, the fastening teeth abut against and compress the conductive fiber bundle in the thickness direction of the guard ring, so that when the cover plate is fixedly connected to the ring body, the fastening teeth can simultaneously achieve a compressing effect and a fastening effect on the conductive fiber bundle. In other words, when the compressing effect and the fastening effect of the fastening teeth on the conductive fiber bundle are ensured, convenience of mounting the cover plate and the ring body is improved, so that mounting efficiency of the guard ring is improved.

In an embodiment, in the circumferential direction of the guard ring, fastening teeth in a same mounting slot are close to a same side wall of the mounting slot, and the fastening teeth compress and abut against the conductive fiber bundle toward another side wall of the mounting slot.

In this embodiment, the fastening teeth in the same mounting slot are close to the same side wall of the mounting slot, so that when extending into the mounting slot, the fastening teeth in the same mounting slot can compress the conductive fiber bundle from the same direction. In this way, an effective contact area between the conductive fiber bundle and the side wall of the mounting slot is further increased, thereby improving the conductive effect and conductive efficiency between the conductive fiber bundle and the ring body.

In an embodiment, in the circumferential direction of the guard ring, a cross-sectional shape of the fastening tooth is any one of a wave shape, a serrated shape, an arc shape, or a straight-line shape.

In an embodiment, in the radial direction of the guard ring, a cross-sectional shape of the mounting slot is at least one of a rectangular shape, an arc shape, a circular shape, a trapezoidal shape, or a triangular shape.

In an embodiment, a distance between the inner ring and an outer ring of the ring body is greater than an extension length of the mounting slot in the radial direction of the ring body.

In this embodiment, the distance between the inner ring and the outer ring of the ring body is set to be greater than the extension length of the mounting slot, so that the mounting slot does not completely extend through the inner ring and the outer ring of the ring body, that is, an end of the mounting slot that is away from the inner ring is closed. In this way, positioning can be performed on the conductive fiber bundle in the radial direction of the ring body, so as to improve a mounting effect and mounting precision of the conductive fiber bundle, and ensure that each conductive fiber bundle can extend out of the inner ring by an equal distance. In addition, the end of the mounting slot that is away from the inner ring is closed, so that the displacement of the conductive fiber bundle in the radial direction of the ring body can be limited, which further fastens the conductive fiber bundle in the radial direction of the ring body. In this way, a contact effect between the conductive fiber bundle and an outer circumferential surface of the motor shaft is ensured, and the conductive effect and the conductive efficiency of the conductive fiber bundle are further improved.

In an embodiment, the mounting slot extends through the outer ring of the ring body in the radial direction of the ring body. The cover plate is provided with one limiting tooth corresponding to each mounting slot, and the limiting tooth is configured to abut against and limit a radial displacement of the conductive fiber bundle in a direction away from the center of the ring body.

In this embodiment, the mounting slot extends through the outer ring of the ring body, so that manufacturing difficulty of the mounting slot can be reduced, and manufacturing precision and manufacturing efficiency of the mounting slot can be improved. A fastening tooth located on an end of the conductive fiber bundle that is away from an inner circumferential surface of the ring body in the radial direction of the ring body is configured as a limiting tooth, and the limiting tooth is configured to abut against and limit the radial displacement of the conductive fiber bundle, so that the limiting tooth can fasten and limit the conductive fiber bundle in the radial direction of the ring body. In other words, the displacement of the conductive fiber bundle can be limited in the radial direction of the ring body, thereby improving operating efficiency and operating performance of the conductive fiber bundle.

In an embodiment, the guard ring includes a plurality of fasteners. The plurality of fasteners are spaced apart in the circumferential direction of the guard ring, and each of the fasteners is located between two mounting slots. Each fastener is used to fasten the cover plate and the ring body in the thickness direction of the guard ring.

In this embodiment, the fasteners are disposed, so that a fixed connection between the cover plate and the ring body can be implemented. In addition, the cover plate is fixedly connected to the ring body by using the fasteners, which can improve assembling accuracy and assembling efficiency of the guard ring, and reduce difficulty of assembling the cover plate and the ring body. Each fastener is disposed between two mounting slots, so that a mounting and fastening effect of the mounting slot on the conductive fiber bundle can be ensured, and structural strength of the guard ring can be improved. The fasteners extend through the cover plate and are fastened on the ring body, which can further improve the structural strength of the guard ring.

In an embodiment, the cover plate is provided with a plurality of mounting holes, and the mounting holes extend through the cover plate in the thickness direction of the guard ring. The plurality of mounting holes are spaced apart in the circumferential direction of the guard ring. A position for disposing each of the mounting holes corresponds to a position between two mounting slots of the ring body. Each fastener extends into one of the mounting holes and is fastened on the ring body.

In an embodiment, a countersunk slot is disposed at an end of the mounting hole that is away from the ring body. In an axial direction of the guard ring, a cross-sectional area of the mounting hole is smaller than a cross-sectional area of the countersunk slot.

In an embodiment, each fastener extends through both the cover plate and the ring body in the thickness direction of the guard ring.

In an embodiment, a positioning hole is disposed on the surface of the ring body that faces the cover plate, and a positioning post is correspondingly disposed on the surface of the cover plate that faces the ring body. The positioning post extends into the positioning hole to position the ring body and the cover plate.

In this embodiment, through disposing of the positioning hole and the positioning post, and fitting between the positioning hole and the positioning post, a positioning effect can be implemented on the cover plate and the ring body in a process of mounting the cover plate and the ring body, so as to ensure that the fastening teeth on the cover plate can be aligned with the mounting slot. In this way, assembling precision and assembling efficiency between the fastening teeth and the mounting slot can be further improved, and the difficulty of assembling the ring body and the cover plate can be reduced.

In an embodiment, the positioning post is disposed on the surface of the cover plate that faces the ring body, and the positioning hole is disposed on the surface of the ring body that faces the cover plate. The positioning post extends into the positioning hole to position the ring body and the cover plate.

In an embodiment, each conductive fiber bundle includes several sub-fibers. An outer surface of each sub-fiber is coated with a conductive coating layer, and the conductive coating layer is configured to conduct with any two adjacent sub-fibers.

In this embodiment, the outer surface of each sub-fiber is coated with the conductive coating layer, so that electrical conduction can be achieved between the sub-fibers, thereby further improving overall conductive efficiency and a conductive effect of each conductive fiber bundle.

A motor is further provided in this application, including a motor shaft and the guard ring according to any one of the foregoing embodiments. The guard ring is sleeved on a periphery of the motor shaft, and conductive fiber bundles of the guard ring are in contact with an outer circumferential surface of the motor shaft.

In this embodiment, the guard ring is disposed to conduct the current away from the motor shaft, so that the shaft voltage on the motor shaft can be reduced, thereby avoiding the adverse phenomenon of electrical corrosion of the motor bearing caused when the shaft voltage on the motor shaft exceeds a threshold voltage of lubricating oil in the motor bearing.

Because the motor provided in this application uses the guard ring according to any one of the foregoing embodiments, the motor provided in this application has all possible beneficial effects of the guard ring according to any one of the foregoing embodiments.

### BRIEF DESCRIPTION OF DRAWINGS

To describe the technical solutions in the embodiments of this application more clearly, the following briefly describes the accompanying drawings required for the embodiments. Clearly, the accompanying drawings in the following descriptions show some embodiments of this application, and a person of ordinary skill in the art may still obtain other accompanying drawings from these accompanying drawings without creative efforts.
FIG. 1 is a schematic diagram of an operating scenario of a motor according to this application;
FIG. 2 is a schematic structural diagram of a guard ring of the motor provided in this application in an embodiment shown in FIG. 1 from a perspective;
FIG. 3 is a schematic structural diagram of a guard ring of the motor provided in this application in an embodiment shown in FIG. 1 from another perspective;
FIG. 4 is a schematic structural diagram of a guard ring of the motor provided in this application in an embodiment shown in FIG. 1 from still another perspective;
FIG. 5 is a schematic diagram of a cross-sectional structure of the guard ring in the embodiment shown in FIG. 4 at a position A-A from a perspective;
FIG. 6 is a schematic diagram of a cross-sectional structure of the guard ring in the embodiment shown in FIG. 4 at a position B-B from a perspective;
FIG. 7 is a schematic structural diagram from a perspective when a conductive fiber bundle is mounted in a mounting slot of a ring body in the embodiment shown in FIG. 6;
FIG. 8 is a schematic structural diagram of the ring body of the guard ring in the embodiment shown in FIG. 7 from a perspective;
FIG. 9 is a schematic diagram of a cross-sectional structure of the ring body in the embodiment shown in FIG. 8 at a position D-D from a perspective;
FIG. 10 is a schematic structural diagram from a perspective when a conductive fiber bundle is mounted in a mounting slot of a ring body in a possible embodiment;
FIG. 11 is a schematic diagram of a cross-sectional structure of the guard ring in the embodiment shown in FIG. 4 at a position C-C from a perspective;
FIG. 12 is a schematic structural diagram of a cover plate in the embodiment shown in FIG. 11 from a perspective;
FIG. 13 is a schematic diagram of a planar structure of a cover plate in the embodiment shown in FIG. 11 from another perspective;
FIG. 14 is a schematic diagram of a cross-sectional structure of the cover plate of the guard ring in the embodiment shown in FIG. 13 at a position E-E from a perspective;
FIG. 15 is a schematic structural diagram of a fastening tooth on a cover plate in a possible embodiment from a perspective; and
FIG. 16 is a schematic diagram of a cross-sectional structure of a sub-fiber of a conductive fiber bundle in a possible embodiment.

### DESCRIPTION OF EMBODIMENTS

For ease of understanding of this application, the following provides a more comprehensive description of this application with reference to related accompanying drawings. Preferred implementations of this application are provided in the accompanying drawings. However, this application may be implemented in a plurality of different forms, and is not limited to the implementations described in this specification. On the contrary, an objective of providing these implementations is to enable a more thorough and comprehensive understanding of the disclosure of this application.

The following descriptions of the embodiments are shown with reference to accompanying drawings to illustrate specific embodiments that may be used to implement this application. A sequence number such as "first" or "second" of a component in this specification is merely used to distinguish between described objects, and does not have any sequence or technical meaning. In addition, unless otherwise specified, the term "connect" and "joint" in this application both include direct and indirect connection (joint). The directional terms mentioned in this application, for example, "upper", "lower", "front", "rear", "left", "right", "internal", "external", and "side", are merely directions based on the accompanying drawings. Therefore, the directional terms are used to better and more clearly describe and understand this application, instead of indicating or implying that a specified apparatus or element should have a specific orientation or be constructed and operated in a specific orientation. Therefore, this cannot be understood as a limitation on this application.

In the descriptions of this application, it should be noted that, unless otherwise specified and limited, terms "mount", "communicate", and "connect" will be understood in a broad sense, for example, may be a fixed connection, a detachable connection, or an integrated connection, may be a mechanical connection, may be a direct connection or an indirect connection by using an intermediate medium, or may be a connection between the inside of two elements. A person of ordinary skill in the art may understand specific meanings of the foregoing terms in this application based on specific situations. It should be noted that the terms such as "first" and "second" in this specification, claims, and accompanying drawings of this application are used to distinguish between different objects, and are not used to describe a specific sequence. In addition, the terms "include", "may include", "comprise", or "may comprise" used in this application indicate existence of a disclosed corresponding function, operation, element, or the like, and do not limit one or more other functions, operations, elements, or the like. In addition, the term "include" or "comprise" indicates existence of corresponding features, numbers, steps, operations, elements, components, or combinations thereof disclosed in this specification, does not rule out existence or addition of one or more other features, numbers, steps, operations, elements, components, or combinations thereof, and is intended to cover non-exclusive inclusions.

Unless otherwise defined, meanings of all technical and scientific terms used in this specification are the same as those usually understood by a person skilled in the art to which this application belongs. The terms used herein in this specification of this application are merely intended to describe specific implementations but not intended to limit this application.

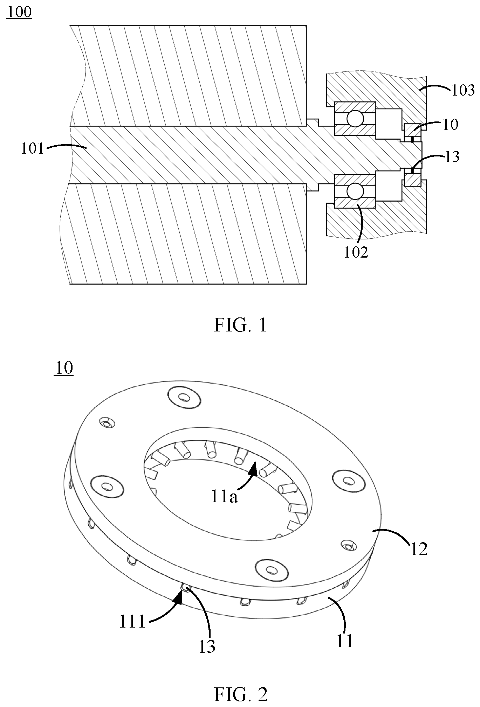

Referring to FIG. 1, FIG. 1 is a schematic diagram of an operating scenario of a motor 100 according to this application. As shown in FIG. 1, the motor 100 provided in this application includes a motor shaft 101, a motor bearing 102, a motor housing 103, and a guard ring 10. The motor shaft 101 is configured to output power. The motor bearing 102 is configured to fasten the motor shaft 101 in the motor housing 103 and enable the motor shaft 101 to rotate around an axis of the motor shaft 101. The guard ring 10 is sleeved on a periphery of the motor shaft 101. A conductive fiber bundle 13 of the guard ring 10 is in contact with an outer circumferential surface of the motor shaft 101, and is configured to conduct a current away from the motor shaft 101.

Specifically, in an embodiment shown in FIG. 1, an outer ring of the motor bearing 102 is fastened to the motor housing 103, and the motor shaft 101 extends into an inner ring of the motor bearing 102 and is fixedly connected to the inner ring of the motor bearing 102, so as to fasten the motor shaft 101 in the motor housing 103 and enable the motor shaft 101 to rotate around the axis of the motor shaft 101, thereby implementing a power output function of the motor 100 provided in this application.

The guard ring 10 is fastened on a periphery of the motor shaft 101, and is in contact with the outer circumferential surface of the motor shaft 101 by using the conductive fiber bundle 13 capable of conducting electricity (see FIG. 2), thereby conducting the current away from the motor shaft 101.

When the motor shaft 101 rotates around the axis of the motor shaft 101, a shaft voltage is formed on the motor shaft 101. In this case, if the shaft voltage on the motor shaft 101 exceeds a breakdown threshold of lubricating oil, the shaft voltage may break down an oil film formed by the lubricating oil and cause partial discharge between balls and an inner surface of the motor bearing 102, which generates an electrical corrosion groove on the inner surface of the motor bearing 102, that is, causes electrical corrosion to the motor bearing 102. In this way, operating performance and operating efficiency of the motor bearing 102 are affected, for example, an adverse case such as seizure of the motor bearing 102 may occur.

The guard ring 10 is sleeved on the periphery of the motor shaft 101, and the current is conducted away from the motor shaft 101 through the conductive fiber bundle 13 capable of conducting electricity, so as to reduce the shaft voltage on the motor shaft 101 and avoid an adverse phenomenon of electrical corrosion of the motor bearing 102, that is, form a protective effect on the motor bearing 102.

For example, in a possible embodiment, when the shaft voltage is formed on the motor shaft 101, a shaft current on the motor shaft 101 flows into the guard ring 10 through the conductive fiber bundle 13 capable of conducting electricity, and then flows from the guard ring 10 to the motor housing 103 fixedly connected to the guard ring 10. In this case, the motor housing 103 may but is not limited to be grounded, thereby achieving an effect of releasing the current conducted to the motor housing 103 to the ground, that is, achieving an effect of discharging the shaft voltage from the motor shaft 101 to the ground.

In other words, the guard ring 10 is fastened on the periphery of the motor shaft 101, and each conductive fiber bundle 13 is in contact with the outer circumferential surface of the motor shaft 101. In this way, a conductive effect can be formed between the conductive fiber bundle 13 and the motor shaft 101, so as to conduct the current on the motor shaft 101 away from the motor shaft 101, thereby reducing the shaft voltage on the motor shaft 101, and avoiding an adverse phenomenon of electrical corrosion of the motor bearing 102 due to an excessively high shaft voltage on the motor shaft 101.

It should be noted that, in the embodiment shown in FIG. 1, only one possible embodiment of the motor 100 is used as an example to describe a possible placement position and the like of each functional structural component in the motor 100. However, an actual structure of the motor 100 and each functional structural component in the motor 100 provided in this application is not limited thereto. That is, in another embodiment of this application, an actual placement position and a structural size of the motor 100 and each functional structural component in the motor 100 may be adjusted based on an actual design requirement, which is not specifically limited in this application.

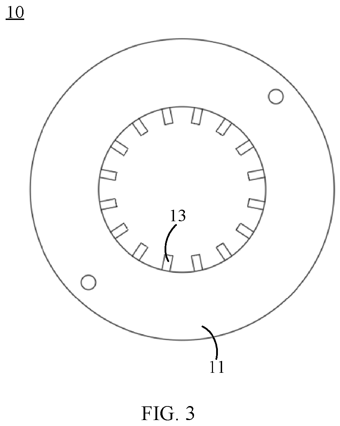

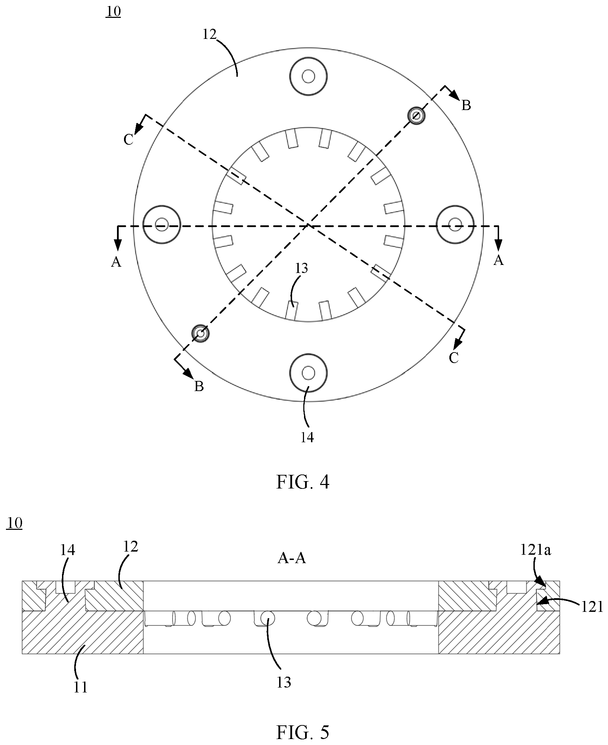

Referring to FIG. 2 to FIG. 4, FIG. 2 is a schematic structural diagram of a guard ring 10 of the motor 100 provided in this application in the embodiment shown in FIG. 1 from a perspective view. FIG. 3 is a schematic structural diagram of the guard ring 10 of the motor 100 provided in this application in the embodiment shown in FIG. 1 from another perspective view. FIG. 4 is a schematic structural diagram of the guard ring 10 of the motor 100 provided in this application in an embodiment shown in FIG. 1 from still another perspective view.

As shown in FIG. 2 to FIG. 4, the guard ring 10 includes a ring body 11, a cover plate 12, and a plurality of conductive fiber bundles 13. The ring body 11 is fixedly connected to the cover plate 12. The plurality of conductive fiber bundles 13 are fastened in the guard ring 10, and the plurality of conductive fiber bundles 13 are spaced apart in a circumferential direction of the guard ring 10.

At least a part of each conductive fiber bundle 13 extends out of the ring body 11 from an inner ring 11a of the ring body 11, so that the conductive fiber bundle 13 extends out of the ring body 11 from the inner ring 11a and can be in contact with the outer circumferential surface of the motor shaft 101. In other words, each conductive fiber bundle 13 extends toward the inner ring 11a of the ring body 11 to extend out of the ring body 11 and is in contact with the outer circumferential surface of the motor shaft 101.

The ring body 11 and the cover plate 12 are provided, so that the guard ring 10 forms a split structure. This ensures a conductive effect of the guard ring 10, facilitates processing and manufacturing of the guard ring 10, and reduces manufacturing difficulty of the guard ring 10.

The plurality of conductive fiber bundles 13 are fastened in the guard ring 10, and the plurality of conductive fiber bundles 13 are spaced apart in the circumferential direction of the guard ring 10, so as to ensure that the conductive fiber bundles 13 can uniformly be in contact with the outer circumferential surface of the motor shaft 101. This ensures a conductive effect of the conductive fiber bundles 13 on the motor shaft 101 and improves a protective effect of the guard ring 10 on the motor bearing 102.

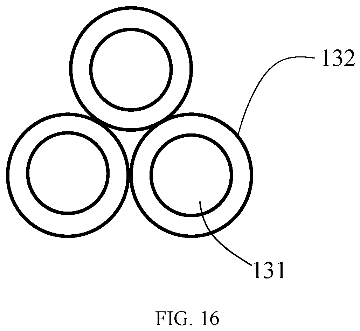

As shown in FIG. 16, in an embodiment, each conductive fiber bundle 13 includes several sub-fibers 131. An outer surface of each sub-fiber 131 is coated with a conductive coating layer 132, and the conductive coating layer 132 is configured to conduct any two adjacent sub-fibers 131. The outer surface of each sub-fiber 131 is coated with the conductive coating layer 132, so that electrical conduction can be achieved between the sub-fibers 131, thereby further improving overall conductive efficiency and the conductive effect of each conductive fiber bundle 13.

In an embodiment, both the cover plate 12 and the ring body 11 are manufactured through mold forming. In this embodiment, the cover plate 12 and the ring body 11 are separately manufactured through mold folding, which can reduce difficulty of a manufacturing process of the guard ring 10 while improving manufacturing precision of the guard ring 10.

Referring to FIG. 5, FIG. 5 is a schematic diagram of a cross-sectional structure of the guard ring 10 in the embodiment shown in FIG. 4 at a position A-A from a perspective. As shown in FIG. 5, in an embodiment, the guard ring 10 includes a plurality of fasteners 14. The plurality of fasteners 14 are spaced apart in the circumferential direction of the guard ring 10, and each fastener 14 is located between two mounting slots 111. Each fastener 14 is configured to fasten the cover plate 12 and the ring body 11 in a thickness direction of the guard ring 10.

Specifically, as shown in FIG. 5, a plurality of mounting holes 121 are disposed on the cover plate 12, and the mounting holes 121 extend through the cover plate 12 in the thickness direction of the guard ring 10. The plurality of mounting holes 121 are spaced apart in the circumferential direction of the guard ring 10. A position for disposing each of the mounting holes 121 corresponds to a position between two mounting slots 111 of the ring body 11.

A quantity of fasteners 14 is the same as a quantity of mounting holes 121. To be specific, each fastener 14 corresponds to one mounting hole 121, and each fastener 14 extends into one mounting hole 121 and is fastened on the ring body 11, thereby implementing a fixed connection between the cover plate 12 and the ring body 11.

In the embodiment shown in FIG. 5, there are four fasteners 14. The four fasteners 14 are sequentially spaced apart in the circumferential direction of the guard ring 10, and the four fasteners 14 are symmetrically distributed about the guard ring 10, so that the ring body 11 and the cover plate 12 can be uniformly fastened, thereby ensuring uniformity of structural strength at all positions of the guard ring 10 and improving a use effect and service life of the guard ring 10.

The fasteners 14 are disposed, so that the fixed connection between the cover plate 12 and the ring body 11 can be implemented. In addition, the cover plate 12 is fixedly connected to the ring body 11 by using the fasteners 14, which can improve assembling accuracy and assembling efficiency of the guard ring 10, and reduce difficulty of assembling the cover plate 12 and the ring body 11.

Each fastener 14 is disposed between two mounting slots 111, so that a mounting and fastening effect of the mounting slot 111 on the conductive fiber bundle 13 can be ensured, and the structural strength of the guard ring 10 can be improved. The fasteners 14 extend through the cover plate 12 and are fastened on the ring body 11, which can further improve the structural strength of the guard ring 10.

In a possible embodiment, the fastener 14 may be, but is not limited to, a structural member such as a rivet or a riveting stud to achieve a riveting connection effect between the ring body 11 and the cover plate 12.

As shown in FIG. 5, in an embodiment, a countersunk slot 121a is disposed at an end of the mounting hole 121 that is away from the ring body 11. In an axial direction of the guard ring 10, a cross-sectional area of the mounting hole 121 is smaller than a cross-sectional area of the countersunk slot 121a. When the fastener 14 extends into the mounting hole 121 and is fastened on the ring body 11, the countersunk slot 121a can accommodate possible deformation of an excess material of the fastener 14.

It should be noted that, in the embodiment shown in FIG. 5, only a case in which there are four fasteners 14 is used as an example for description, but the quantity of fasteners 14 used to fasten the cover plate 12 and the ring body 11 is not limited to only four. The quantity of fasteners 14 may be adjusted based on an actual design requirement or a structural strength requirement, which is not specifically limited in this embodiment of this application.

In addition, in the embodiment shown in FIG. 5, only a case in which the fasteners 14 extend through the cover plate 12 in the thickness direction of the guard ring 10 is used as an example for description, but the fasteners 14 are not limited to extending through only the cover plate 12.

For example, in a possible embodiment, in the thickness direction of the guard ring 10, the fasteners 14 may alternatively extend through both the cover plate 12 and the ring body 11.

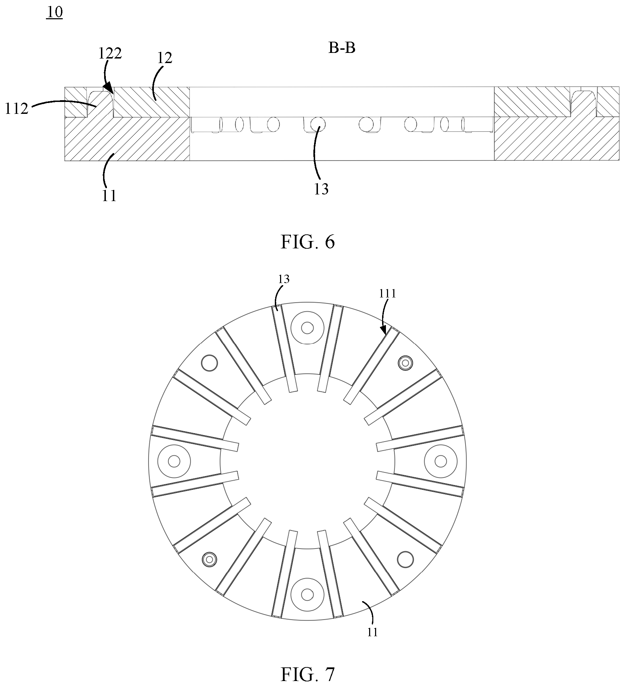

Referring to FIG. 6, FIG. 6 is a schematic diagram of a cross-sectional structure of the guard ring 10 in the embodiment shown in FIG. 4 at a position B-B from a perspective. As shown in FIG. 6, in an embodiment, a positioning hole 122 is disposed on the surface of the ring body 11 that faces the cover plate 12, and a positioning post 112 is correspondingly disposed on the surface of the cover plate 12 that faces the ring body 11. The positioning post 112 extends into the positioning hole 122 to position the ring body 11 and the cover plate 12.

Specifically, as shown in FIG. 6, the positioning post 112 is convexly disposed on the surface of the ring body 11 that faces the cover plate 12, and is disposed to avoid positions of the mounting slot 111 and the fastener 14.

The positioning hole 122 that fits with the positioning post 112 is disposed on the surface of the cover plate 12 that faces the ring body 11, and extends from the surface of the cover plate 12 that faces the ring body 11 toward the surface of the cover plate 12 that is away from the ring body 11.

A quantity of positioning holes 122 is equal to a quantity of positioning posts 112, and each positioning hole 122 is disposed corresponding to one positioning post 112, so that each positioning post 112 can extend into one positioning hole 122 to achieve a positioning effect.

The positioning hole 122 may completely extend through the cover plate 12 or may partially extend through the cover plate 12 in the thickness direction of the guard ring 10. In other words, in the thickness direction of the guard ring 10, an extension length of the positioning hole 122 may be, but is not limited to, equal to an extension length of the positioning post 112, or may be greater than the extension length of the positioning post 112.

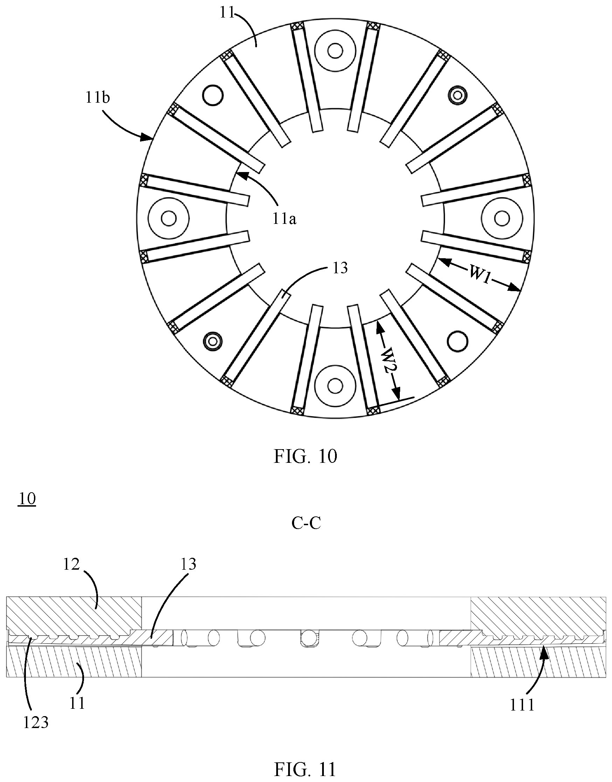

It will be understood that through disposing of the positioning hole 122 and the positioning post 112 and fitting between the positioning hole 122 and the positioning post 112, a positioning effect can be implemented on the cover plate 12 and the ring body 11 in a process of mounting the cover plate 12 and the ring body 11, so as to ensure that fastening teeth 123 (see FIG. 11) on the cover plate 12 can be aligned with the mounting slot 111. In this way, assembling precision and assembling efficiency between the fastening teeth 123 and the mounting slot 111 can be further improved, and the difficulty of assembling the ring body 11 and the cover plate 12 can be reduced.

It should be noted that in FIG. 6, only one possible embodiment of the positioning hole 122 and the positioning post 112 is used as an example for description. However, structural positions and structural sizes of the positioning hole 122 and the positioning post 112 are not limited herein. In other words, placement positions of the positioning hole 122 and the positioning post 112 and the structural sizes of the positioning hole 122 and the positioning post 112 may be adjusted based on an actual design requirement. This is not specifically limited in this application.

For example, in a possible embodiment, the positioning post 112 is disposed on the surface of the cover plate 12 that faces the ring body 11, and the positioning hole 122 is disposed correspondingly on the surface of the ring body 11 that faces the cover plate 12.

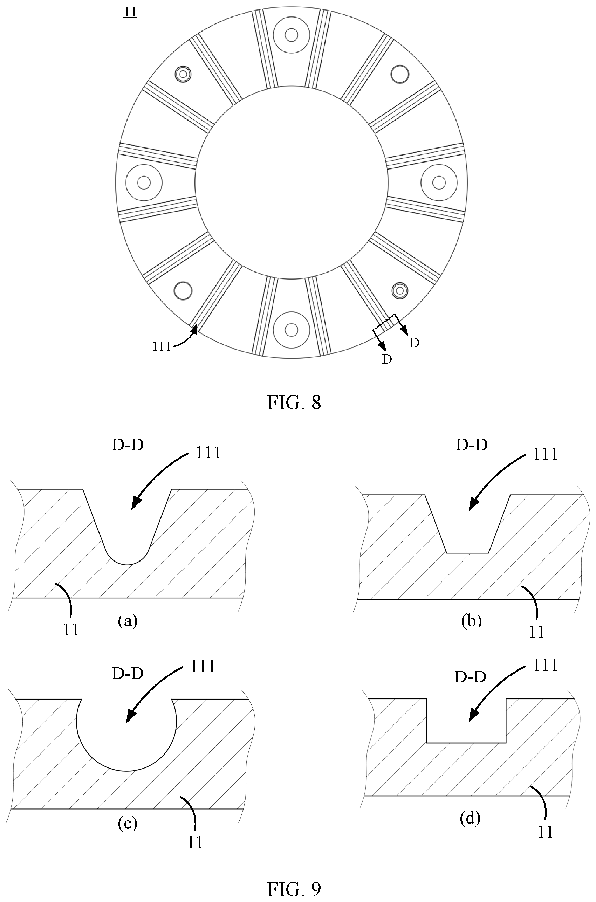

Further, referring to FIG. 7 and FIG. 8, FIG. 7 is a schematic structural diagram from a perspective view when a conductive fiber bundle 13 is mounted in a mounting slot 111 of a ring body 11 in the embodiment shown in FIG. 6. FIG. 8 is a schematic structural diagram of the ring body 11 of the guard ring 10 in the embodiment shown in FIG. 7 from a perspective view. As shown in FIG. 7 and FIG. 8, a plurality of mounting slots 111 are disposed on the surface of the ring body 11 that faces the cover plate 12, and the mounting slots 111 are spaced apart in the circumferential direction of the ring body 11.

Each mounting slot 111 extends through the inner ring 11a of the ring body 11 in a radial direction of the ring body 11, and a conductive fiber bundle 13 is fastened in each mounting slot 111.

To be specific, a quantity of mounting slots 111 disposed on the surface of the ring body 11 that faces the cover plate 12 is the same as a quantity of conductive fiber bundles 13, and each conductive fiber bundle 13 is correspondingly mounted in one mounting slot 111, so that the mounting slots 111 can accommodate the conductive fiber bundles 13, and can provide clearance for the fixed connection between the ring body 11 and the cover plate 12.

It will be understood that the ring body 11 is provided with the mounting slots 111, so that the conductive fiber bundles 13 can be mounted in the mounting slots 111, thereby achieving an effect of accommodating and positioning the conductive fiber bundles 13.

In addition, each mounting slot 111 extends through the inner ring 11a of the ring body 11 in the radial direction of the ring body 11, so that the conductive fiber bundle 13 fastened in each mounting slot 111 extends out of the mounting slot 111 toward a center of the ring body 11. In this way, an extending end of the conductive fiber bundle 13 can be in contact with the outer circumferential surface of the motor shaft 101, thereby achieving a conductive effect.

The center of the ring body 11 will be understood as a geometric center of a cross-sectional shape of the ring body 11 in an axial direction, or will be understood as an axis of the ring body 11.

Referring to FIG. 9, FIG. 9 is a schematic diagram of a cross-sectional structure of the ring body 11 in the embodiment shown in FIG. 8 at a position D-D from a perspective. As shown in FIG. 9, in an embodiment, in a radial direction of the guard ring 10, a cross-sectional shape of the mounting slot 111 may be but is not limited to at least one of a rectangular shape, an arc shape, a circular shape, a trapezoidal shape, or a triangular shape.

In other words, the cross-sectional shape of the mounting slot 111 may be any one of a rectangular shape, an arc shape, a circular shape, a trapezoidal shape, or a triangular shape, or may be a shape formed by a combination of a plurality of shapes among a rectangular shape, an arc shape, a circular shape, a trapezoidal shape, and a triangular shape.

Specifically, as shown in (a) in FIG. 9, the cross-sectional shape of the mounting slot 111 may be a combination of a circular shape and a trapezoidal shape.

As shown in (b) to (d) in FIG. 9, the cross-sectional shape of the mounting slot 111 may be any one of a trapezoidal shape, a partial circular shape, or a rectangular shape.

It should be noted that, in the embodiment shown in FIG. 9, only a possible embodiment of the cross-sectional shape of the mounting slot 111 is used as an example for description, but the cross-sectional shape of the mounting slot 111 is not limited thereto. In another embodiment of this application, the cross-sectional shape of the mounting slot 111 and a cross-sectional size of the mounting slot 111 may be adjusted based on an actual design requirement or a cross-sectional shape of the conductive fiber bundle 13 along an axis of the conductive fiber bundle 13. This is not specifically limited in this application.

Referring to FIG. 10, FIG. 10 is a schematic structural diagram from a perspective view when a conductive fiber bundle 13 is mounted in a mounting slot 111 of a ring body 11 in a possible embodiment. As shown in FIG. 10, in an embodiment, a distance between the inner ring 11a and an outer ring 11b of the ring body 11 is greater than an extension length of the mounting slot 111 in the radial direction of the ring body 11.

Specifically, in the embodiment shown in FIG. 10, there is a spacing distance W1 between the inner ring 11a and the outer ring 11b of the ring body 11 in the radial direction of the ring body 11. The mounting slot 111 extends from the inner ring 11a toward the outer ring 11b with an extension length W2.

The spacing distance W1 is greater than the extension length W2. In other words, the mounting slot 111 does not completely extend from the inner ring 11a to the outer ring 11b. In this case, when the conductive fiber bundle 13 is mounted in the mounting slot 111, an end surface of the conductive fiber bundle 13 that is away from the motor shaft 101 is attached to a wall surface of the mounting slot 111 that faces the motor shaft 101, thereby achieving a limiting effect on the conductive fiber bundle 13.

It will be understood that, in this embodiment, the distance between the inner ring 11a and the outer ring 11b of the ring body 11 is set to be greater than the extension length W2 of the mounting slot 111, so that the mounting slot 111 does not completely extend through the inner ring 11a and the outer ring 11b of the ring body 11, that is, the end of the mounting slot 111 that is away from the inner ring 11a is closed. In this way, positioning can be performed on the conductive fiber bundle in the radial direction of the ring body 11, so as to improve a mounting effect and mounting precision of the conductive fiber bundle 13, and ensure that each conductive fiber bundle 13 can extend out of the inner ring 11a by an equal distance.

In addition, the end of the mounting slot 111 that is away from the inner ring 11a is closed, so that a displacement of the conductive fiber bundle 13 in the radial direction of the ring body 11 can be limited, which further fastens the conductive fiber bundle 13 in the radial direction of the ring body 11. In this way, a contact effect between the conductive fiber bundle 13 and the outer circumferential surface of the motor shaft 101 is ensured, and the conductive effect and conductive efficiency of the conductive fiber bundle 13 are further improved.

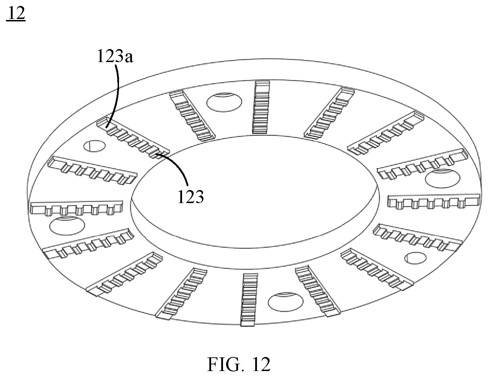

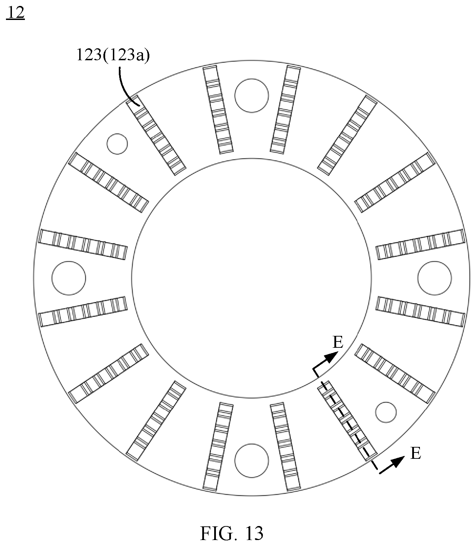

Referring to FIG. 11 to FIG 13, FIG. 11 is a schematic diagram of a cross-sectional structure of the guard ring 10 in the embodiment shown in FIG. 4 at a position C-C from a perspective view. FIG. 12 is a schematic structural diagram of a cover plate 12 in the embodiment shown in FIG. 11 from a perspective. FIG. 13 is a schematic diagram of a planar structure of a cover plate 12 in the embodiment shown in FIG. 11 from another perspective view. As shown in FIG. 11 to FIG. 13, the surface of the cover plate 12 that faces the ring body 11 is in contact with at least a part of each conductive fiber bundle 13, and the conductive fiber bundle 13 is fastened in the mounting slot 111.

Specifically, a plurality of fastening tooth groups 123a are convexly disposed on the surface of the cover plate 12 that faces the ring body 11, and the fastening tooth group 123a is configured to fasten the conductive fiber bundle 13 in the mounting slot 111.

As shown in FIG. 12 and FIG. 13, a position of each fastening tooth group 123a is aligned with one mounting slot 111. At least two fastening teeth 123 are spaced apart in each fastening tooth group 123a, that is, at least two fastening teeth 123 form one fastening tooth group 123a.

In other words, the plurality of fastening tooth groups 123a are spaced apart in a circumferential direction of the cover plate 12, and each fastening tooth group 123a extends in a radial direction of the cover plate 12. Each fastening tooth group 123a is disposed corresponding to a position of one mounting slot 111, so that the fastening teeth 123 in each fastening tooth group 123a can extend into the mounting slot 111 to abut against the fiber bundle 13, thereby fastening the fiber bundle 13 in the mounting slot 111.

Each fastening tooth group 123a is provided with at least two fastening teeth 123 spaced apart in the radial direction of the cover plate 12. The at least two fastening teeth 123 can extend into a mounting slot 111 corresponding to the at least two fastening teeth 123, and abut against and compress a conductive fiber bundle 13 mounted in the mounting slot 111, so as to fasten the conductive fiber bundle 13 corresponding to the at least two fastening teeth 123.

It will be understood that the fastening teeth 123 are disposed on the surface of the cover plate 12 that faces the ring body 11, and positions of the fastening teeth 123 are aligned with the mounting slot 111. In this way, when the cover plate 12 is fixedly connected to the ring body 11, the fastening teeth 123 can extend into the mounting slot 111 and exert a compressing effect on the conductive fiber bundle 13 mounted in the mounting slot 111, which can increase an effective contact area between the conductive fiber bundle 13 and the surface of the ring body 11, thereby further improving a conductive effect between the conductive fiber bundle 13 and the ring body 11 and improving a protective effect on the motor bearing 102.

The at least two fastening teeth 123 are spaced apart corresponding to each mounting slot 111, and the at least two fastening teeth 123 compress the conductive fiber bundle 13 from different positions in the radial direction of the ring body 11, which can ensure the effective contact area between the entire conductive fiber bundle 13 and the ring body 11, so as to further improve the conductive effect between the conductive fiber bundle 13 and the ring body 11, further improve the protective effect of the guard ring 10 provided in this application on the motor bearing 102, and improve use performance and use effect of the guard ring 10 provided in this application.

In the embodiment shown in FIG. 11, the fastening teeth 123 abut against and compress the conductive fiber bundle 13 in the thickness direction of the guard ring 10.

The fastening teeth 123 abut against and compress the conductive fiber bundle 13 in the thickness direction of the guard ring 10, so that when the cover plate 12 is fixedly connected to the ring body 11, the fastening teeth 123 can simultaneously achieve a compressing effect and a fastening effect on the conductive fiber bundle 13.

In other words, when the compressing effect and the fastening effect of the fastening teeth 123 on the conductive fiber bundle 13 are ensured, convenience of mounting the cover plate 12 and the ring body 11 is improved, so that mounting efficiency of the guard ring 10 is improved.

In an embodiment, in the circumferential direction of the guard ring 10, fastening teeth 123 in a same mounting slot 111 are close to a same side wall of the mounting slot 111, and the fastening teeth 123 compress and abut against the conductive fiber bundle 13 toward another side wall of the mounting slot 111.

The fastening teeth 123 in the same mounting slot 111 are close to the same side wall of the mounting slot 111, so that when extending into the mounting slot 111, the fastening teeth 123 in the same mounting slot 111 can compress the conductive fiber bundle 13 from a same direction. In this way, an effective contact area between the conductive fiber bundle 13 and the side wall of the mounting slot 111 is further increased, thereby improving the conductive effect and the conductive efficiency between the conductive fiber bundle 13 and the ring body 11.

In addition, it will be understood that, when the fastening teeth 123 corresponding to the same mounting slot 111 extend into the mounting slot 111, the fastening teeth 123 can compress the conductive fiber bundle 13 from the same direction in the circumferential direction of the guard ring 10, so that a larger contact surface is formed between the fastening teeth 123 and the conductive fiber bundle 13. This enables the fastening teeth 123 to uniformly compress all positions of the conductive fiber bundle 13, and avoids an adverse phenomenon of deformation or even breakage of the conductive fiber bundle 13 caused by an excessively high degree of compression of the fastening teeth 123 on the conductive fiber bundle 13.

In an embodiment, on a cross section perpendicular to the radial direction of the guard ring 10, a cross-sectional area of the fastening tooth group 123a located in the mounting slot 111 is 5% to 30% of a cross-sectional area of the mounting slot 111. The cross-sectional area will be understood as a cross-sectional area perpendicular to an extension direction of the fiber bundle 13.

It will be understood that a larger cross-sectional area of the fastening teeth 123 relative to the cross-sectional area of the mounting slot 111 indicates a greater degree of compression on a conductive fiber bundle 13 corresponding to the fastening teeth 123 when the fastening teeth 123 extend into the mounting slot 111, that is, a greater degree of compression on the conductive fiber bundle 13.

The cross-sectional area of the fastening teeth 123 is set to be 5% to 30% of the cross-sectional area of the mounting slot 111, so that the degree of compression of the fastening teeth 123 on the conductive fiber bundle 13 can be limited. This ensures that the fastening teeth 123 compress the conductive fiber bundle 13 to increase the effective contact area between the conductive fiber bundle 13 and the ring body 11, while avoiding an adverse phenomenon of possible breakage of the conductive fiber bundle 13 when being compressed to be deformed by the fastening teeth 123 due to an excessively high degree of compression of the fastening teeth 123 on the conductive fiber bundle 13.

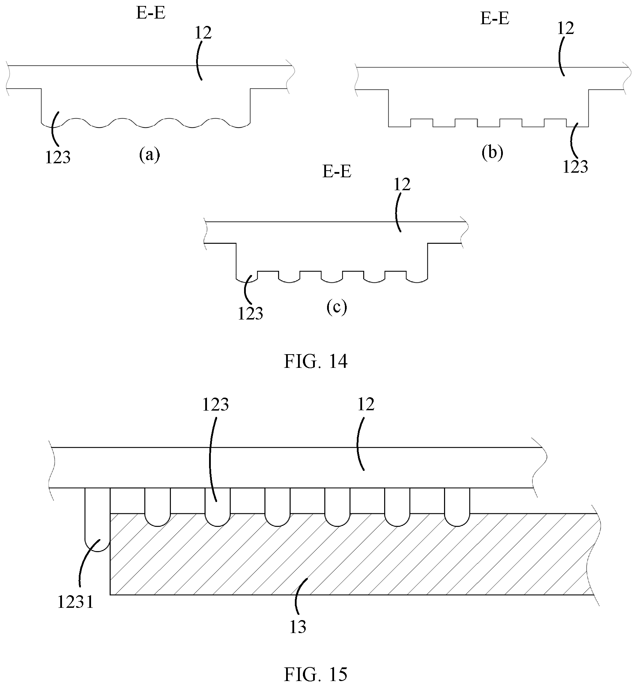

Referring to FIG. 14, FIG. 14 is a schematic diagram of a cross-sectional structure of the cover plate 12 of the guard ring 10 in the embodiment shown in FIG. 13 at a position E-E from a perspective view. As shown in FIG. 14, in an embodiment, in the circumferential direction of the guard ring 10, a cross-sectional shape of the fastening tooth 123 may be but is not limited to any one of a wave shape, a serrated shape, an arc shape, or a straight-line shape.

In an embodiment, in the extension direction of each fiber bundle 13, a cross-sectional width of the fastening teeth 123 is less than or equal to a cross-sectional width of the mounting slot 111 corresponding to the fastening teeth 123, so as to ensure that the fastening teeth 123 can extend into the mounting slot 111 corresponding to the fastening teeth 123.

Referring to FIG. 15, FIG. 15 is a schematic structural diagram of a fastening tooth 123 on a cover plate 12 in a possible embodiment from a perspective view. As shown in FIG. 15, in an embodiment, the mounting slot 111 extends through the outer ring 11b of the ring body 11 in the radial direction of the ring body 11.

The cover plate 12 is provided with one limiting tooth 1231 corresponding to each mounting slot 111, and the limiting tooth 1231 is configured to abut against and limit a radial displacement of the conductive fiber bundle 13 in a direction away from the center of the ring body 11.

For example, in the radial direction of the ring body 11, the limiting tooth 1231 is located at an end of the fastening tooth group 123a that is away from the motor shaft 101 in the radial direction of the ring body 11. The limiting tooth 1231 is configured to abut against and limit the radial displacement of the conductive fiber bundle 13 in the direction away from the center of the ring body 11.

In other words, one limiting tooth 1231 is provided corresponding to each mounting slot 111, and the limiting tooth 1231 is located at an end of the conductive fiber bundle 13 that is away from the motor shaft 101 in the radial direction of the ring body 11. A surface of the limiting tooth 1231 that faces the motor shaft 101 is attached to a surface of the conductive fiber bundle 13 that is away from the motor shaft 101.

In this embodiment, the mounting slot 111 extends through the outer ring 11b of the ring body 11, so that manufacturing difficulty of the mounting slot 111 can be reduced, and manufacturing precision and manufacturing efficiency of the mounting slot 111 can be improved.

The limiting tooth 1231 is provided, and the surface of the limiting tooth 1231 that faces the motor shaft 101 is attached to the surface of the conductive fiber bundle 13 that is away from the motor shaft 101, so that the limiting tooth 1231 can fasten and limit the conductive fiber bundle 13 in the radial direction of the ring body 11. In other words, the displacement of the conductive fiber bundle 13 can be limited in the radial direction of the ring body 11, thereby improving operating efficiency and operating performance of the conductive fiber bundle 13.

A conductive fiber bundle in an existing guard ring usually employs a fastening structure in a single-point fastening manner, which results in a small effective contact area between the conductive fiber bundle and a ring body. Consequently, a conductive effect between the conductive fiber bundle and the ring body is poor, and a protective effect on a motor bearing is reduced.

In the guard ring 10 provided in this application, the fastening teeth 123 are disposed on the surface of the cover plate 12 that faces the ring body 11, and the positions of the fastening teeth 123 are aligned with the mounting slot 111. In this way, when the cover plate 12 is fixedly connected to the ring body 11, the fastening teeth 123 can extend into the mounting slot 111 and exert a compressing effect on the conductive fiber bundle 13 mounted in the mounting slot 111, which can increase the effective contact area between the conductive fiber bundle 13 and the surface of the ring body 11, thereby improving the conductive effect between the conductive fiber bundle 13 and the ring body 11 and improving the protective effect on the motor shaft 101.

In addition, the fastening teeth 123 compress the corresponding conductive fiber bundle 13, so that the conductive fiber bundle 13 can be fastened in the mounting slot 111. This avoids poor contact between the conductive fiber bundle 13 and the motor shaft 101 due to a possible displacement of the conductive fiber bundle 13 in the radial direction of the ring body 11, thereby further improving an effect of current conduction away from the motor shaft 101 by the conductive fiber bundle 13.

The at least two fastening teeth 123 are spaced apart corresponding to each mounting slot 111, and the at least two fastening teeth 123 compress the conductive fiber bundle 13 from different positions in the radial direction of the ring body 11, which can ensure the effective contact area between the entire conductive fiber bundle 13 and the ring body 11, so as to further improve the conductive effect between the conductive fiber bundle 13 and the ring body 11, further improve the protective effect of the guard ring 10 provided in this application on the motor bearing 102, and improve the use performance and the use effect of the guard ring 10 provided in this application.

Further, because the motor 100 provided in this application uses the guard ring 10 according to any one of the foregoing embodiments, the motor 100 provided in this application has all possible beneficial effects of the guard ring 10 according to any one of the foregoing embodiments.

It will be understood that the terms such as "first" and "second" are used for a descriptive purpose only and will not be understood as indicating or implying relative importance or implicitly indicating the quantity of the indicated technical features. Therefore, features defined with "first" and "second" may explicitly or implicitly include one or more features. In the descriptions of the implementations of this application, "a plurality of" means two or more, unless otherwise explicitly defined.

In the description of this specification, reference to descriptions of terms such as "one implementation", "some implementations", "exemplary implementation", "example", "specific example", and "some examples" means that specific characteristics, structures, materials, or features described with reference to an implementation or an example is included in at least one implementation or example of this application. In this specification, illustrative expressions of the foregoing terms do not necessarily refer to a same implementation or example. In addition, the described specific features, structures, materials, or characteristics may be combined in an appropriate manner in any one or more implementations or examples.

It will be understood that the application of this application is not limited to the foregoing examples. A person of ordinary skill in the art may make improvements or changes according to the foregoing description, and all the improvements and changes shall fall within the protection scope of the claims appended to this application. A person of ordinary skill in the art may understand that all or some of procedures for implementing the foregoing embodiments and equivalent modifications made according to the claims of this application shall fall within the scope of this application.

## Claims

1. A guard ring (10), wherein the guard ring (10) comprises a ring body (11), a cover plate (12), and a plurality of conductive fiber bundles (13), the ring body (11) being fixedly connected to the cover plate (12), a plurality of mounting slots (111) being disposed on a surface of the ring body (11) that faces the cover plate (12), the mounting slots (111) being spaced apart in a circumferential direction of the ring body (11), the mounting slots (111) extending through an inner ring (11a) of the ring body (11) in a radial direction of the ring body (11), each of the conductive fiber bundles (13) being fastened in each of the mounting slots (111), and each conductive fiber bundle (13) facing a center of the ring body (11) and extending out of the mounting slot (111) to be in contact with a motor shaft (101); and
a plurality of fastening tooth groups (123a) being convexly disposed on a surface of the cover plate (12) that faces the ring body (11), and the fastening tooth group (123a) being configured to fasten the conductive fiber bundle (13) in the mounting slot (111).

2. The guard ring (10) according to claim 1, wherein a position of the fastening tooth group (123a) is aligned with the mounting slot (111), and at least two fastening teeth (123) are spaced apart in the fastening tooth group (123a).

3. The guard ring (10) according to claim 1 or 2, wherein both the cover plate (12) and the ring body (11) are prepared through mold forming.

4. The guard ring (10) according to any one of claims 1 to 3, wherein on a cross section perpendicular to a radial direction of the guard ring (10), a cross-sectional area of the fastening teeth (123) located in the mounting slot (111) is 5% to 30% of a cross-sectional area of the mounting slot (111).

5. The guard ring (10) according to any one of claims 1 to 4, wherein the fastening teeth (123) abut against and compress the conductive fiber bundle (13) in a thickness direction of the guard ring (10).

6. The guard ring (10) according to any one of claims 1 to 5, wherein in a circumferential direction of the guard ring (10), fastening teeth (123) in a same mounting slot (111) are close to a same side wall of the mounting slot (111), and the fastening teeth (123) compress and abut against the conductive fiber bundle (13) toward another side wall of the mounting slot (111).

7. The guard ring (10) according to any one of claims 1 to 6, wherein in the circumferential direction of the guard ring (10), a cross-sectional shape of the fastening tooth (123) is any one of a wave shape, a serrated shape, an arc shape, or a straight-line shape.

8. The guard ring (10) according to any one of claims 1 to 7, wherein in the radial direction of the guard ring (10), a cross-sectional shape of the mounting slot (111) is at least one of a rectangular shape, an arc shape, a circular shape, a trapezoidal shape, or a triangular shape.

9. The guard ring (10) according to any one of claims 1 to 8, wherein in the radial direction of the ring body (11), a distance between the inner ring (11a) and an outer ring (11b) of the ring body (11) is greater than an extension length of the mounting slot (111).

10. The guard ring (10) according to any one of claims 1 to 9, wherein the mounting slot (111) extends through the outer ring (11b) of the ring body (11) in the radial direction of the ring body (11); and
the cover plate (12) is provided with one limiting tooth (1231) corresponding to each mounting slot (111), and the limiting tooth (1231) is configured to abut against and limit a radial displacement of the conductive fiber bundle (13) in a direction away from the center of the ring body (11).

11. The guard ring (10) according to any one of claims 1 to 10, wherein the guard ring (10) comprises a plurality of fasteners (14), the plurality of fasteners (14) are spaced apart in the circumferential direction of the guard ring (10), and each of the fasteners (14) is located between two mounting slots (111); and
each fastener (14) is configured to fasten the cover plate (12) and the ring body (11) in the thickness direction of the guard ring (10).

12. The guard ring (10) according to claim 11, wherein the cover plate (12) is provided with a plurality of mounting holes (121), the mounting holes (121) extend through the cover plate (12) in the thickness direction of the guard ring (10), the plurality of mounting holes (121) are spaced apart in the circumferential direction of the guard ring (10), a position for disposing each of the mounting holes (121) corresponds to a position between two mounting slots (111) of the ring body (11), and each fastener (14) extends into one of the mounting holes (121) and is fastened on the ring body (11).

13. The guard ring (10) according to claim 12, wherein a countersunk slot (121a) is disposed at an end of the mounting hole (121) that is away from the ring body (11), and in an axial direction of the guard ring (10), a cross-sectional area of the mounting hole (121) is smaller than a cross-sectional area of the countersunk slot (121a).

14. The guard ring (10) according to any one of claims 1 to 13, wherein a positioning hole (122) is disposed on the surface of the ring body (11) that faces the cover plate (12), and a positioning post (112) is correspondingly disposed on the surface of the cover plate (12) that faces the ring body (11); and/or, a positioning post (112) is disposed on the surface of the cover plate (12) that faces the ring body (11), a positioning hole (122) is disposed on the surface of the ring body (11) that faces the cover plate (12), and the positioning post (112) extends into the positioning hole (122) to position the ring body (11) and the cover plate (12).

15. The guard ring (10) according to any one of claims 1 to 14, wherein each of the conductive fiber bundles (13) comprises several sub-fibers (131), an outer surface of each of the sub-fibers (131) is coated with a conductive coating layer (132), and the conductive coating layer (132) is configured to conduct any two adjacent sub-fibers (131).

16. A motor (100) comprising a motor shaft (101) and the guard ring (10) according to any one of claims 1 to 15, the guard ring (10) being sleeved on a periphery of the motor shaft (101), and conductive fiber bundles (13) of the guard ring (10) being in contact with an outer circumferential surface of the motor shaft (101).
